# EUROPEAN PATENT APPLICATION

(11) **EP 1 746 317 A1**
(43) Date of publication of application: **24.01.2007**
(21) Application number: 05425534.4
(22) Date of filing: 22.07.2005
(51) Int. Cl.: F16K 23/00, B08B 3/02, F16K 21/12

(54) **Self-closing valve with adjustable activation**

(71) Applicant: Arrow Line S.R.L., 42048 Rubiera (Reggio Emilia) (IT)
(72) Inventor: Amaduzzi, Roberto, 42048 Rubiera (RE) (IT)
(74) Representative: Gotra, Stefano

(57) **Abstract**

The valve (1) exhibits an external body (2) affording an internal cavity (3) which terminates externally of the external body (2) with an outlet section (4) and an inlet section (5). A piston (7) is slidingly and sealedly housed inside the cavity (3), and defines a first chamber (8) and a second chamber (9) therein. The piston (7) internally exhibits a channel (11) communicating with the first chamber (8), through a first hole (12), and the second chamber (9), through a second hole (13). Internally of the channel (11) the piston (7) exhibits means for intercepting the fluid (15) for slowing fluid passage from the first chamber (8) to the second chamber (9).

## Description

The device of the invention is applicable, for example, to the field of water-cleaning machines but offers considerable versatility, so that it can be used in any hydraulic circuit including a positive displacement pump and a device governing a fluid at pressure.

With reference, for example, to water-cleaning machines, over the past few years the market has seen an increase in the performance of these machines, with increases in pressure and flow rate.

These increases cause some difficulties in the manoeuvrability of the water guns dispensing the pressurised fluid.

In the prior art, the hydraulic circuit of a water-cleaning machine includes a pump, preferably positive displacement with pistons, connected downstream through a conduit with a valve, which valve is connected to a pistol for dispensing the pressurised fluid.

This valve is connected through a further by-pass conduit to the pump.

In the briefly above-described configuration, when the gun is shut off the valve traps the pressurised fluid between the connection conduit which joins the valve and the gun, zeroing the pressure between valve and pump in the by-pass circuit, as the by-pass discharge is opened.

When the gun opens the flow in the connection conduit between valve and gun is abruptly freed and a reaction force is generated on the gun handle, having an opposite direction to the fluid dispensing direction.

The types of valves used in these types of circuit are pressure isolators, which operate with very short reaction times and with usually high reaction forces on opening of the gun.

The main aim of the present invention is to provide a self-closing valve which can be regulated and which is able to reduce the entity of the reaction force during the transitory period of opening a pressurised fluid dispensing device such as, for example, a gun for water-cleaning machines.

In this context the term "transitory" is taken to mean the time that passes from the start of dispensing to reaching the working flow-rate of the gun.

A second aim of the present device is to provide an adjustable self-closing valve which includes the possibility of regulating the duration of the transitory period of opening of a pressurised fluid dispensing device such as, for example, a gun for water-cleaning machines.

A further aim of the present device is to provide an adjustable self-closing valve which, by limiting the reaction forces that come into play, enables a greater working life of the mechanical organs that make up the hydraulic circuit, which are no longer subject to sudden shocks.

These aims and advantages and more besides are all attained by the invention as it is characterised in the claims that follow.

Further characteristics and advantages of the present invention will better emerge from the detailed description that follows of a preferred but non-exclusive embodiment of the invention, illustrated purely by way of nonlimiting example in the accompanying figures of the drawings, in which:
Figure 1 is a lateral view in section of the adjustable self-closing valve of the invention in the rest position;
Figure 2 is a lateral view in section of the adjustable self-closing valve of the invention in the closed position;
Figure 3 illustrates a first application of the adjustable self-closing valve of the invention mounted in parallel with a traditional control valve of a fluid dispenser device;
Figure 4 illustrates a first application of the adjustable self-closing valve of the invention mounted in series with a traditional control valve of a fluid dispenser device;
Figure 5 is a detailed view of a constructional detail of the adjustable self-closing valve.

With reference to the figures of the drawings, 1 denotes in its entirety an adjustable self-closing valve.

The valve 1 exhibits an external body 2 having a predominant direction along an axis X-X.

The external body 2 internally comprises a cavity 3 terminating externally with respect to the external body 2 with an outlet section 4 and an inlet section 5.

The outlet section 4 is preferably oriented along the axis X-X while the inlet section 5 is preferably oriented transversally with respect to the outlet section 4.

A seating 19 is present at the outlet section 4, in which seating 19 an annular striker element 20 is housed, affording a hole 21 which is preferably arranged coaxially to the axis X-X; exiting fluid is channelled through this hole 21.

The seating 19 further exhibits an increase in section 25 housing an annular body 18 located in contact with the striker element 20, which annular body 18 exhibits an internal diameter which is smaller than the external diameter of the striker element 20.

Opposite to the outlet section 4 there is a cap 6 which is connectable to the external body 2 by means of a threaded coupling.

A piston 7 sealedly slides internally of the cavity 3 in a parallel direction to the axis X-X.

The piston 7 defines a first chamber 8 internally of the cavity 3, which first chamber 8 is located downstream of the piston 7, and also defines a second chamber 9 upstream of the piston 7.

The first chamber 8 communicates between the inlet section 5 and the outlet section 4, while the second chamber faces the cap 6.

The piston 7, activated reciprocally by viscous forces and contrasted by elastic means 10 and a pressure difference to close or open the outlet section 4, internally exhibits a channel 11 having a development axis that preferably coincides with the axis X-X, thus being coaxial to the hole 21 of the striker element 20.

The channel 11, which enables communication between the first chamber 8 and the second chamber 9, is defined by a first tract 22, a first hole 12, able to place the first chamber 8 and the first tract 22 in communication, and a second hole 13, enabling communication between the second chamber 9 and the first tract 22.

The first tract 22 exhibits, in proximity of the second chamber 9, a change in section which defines a first portion 16 and a second portion 17.

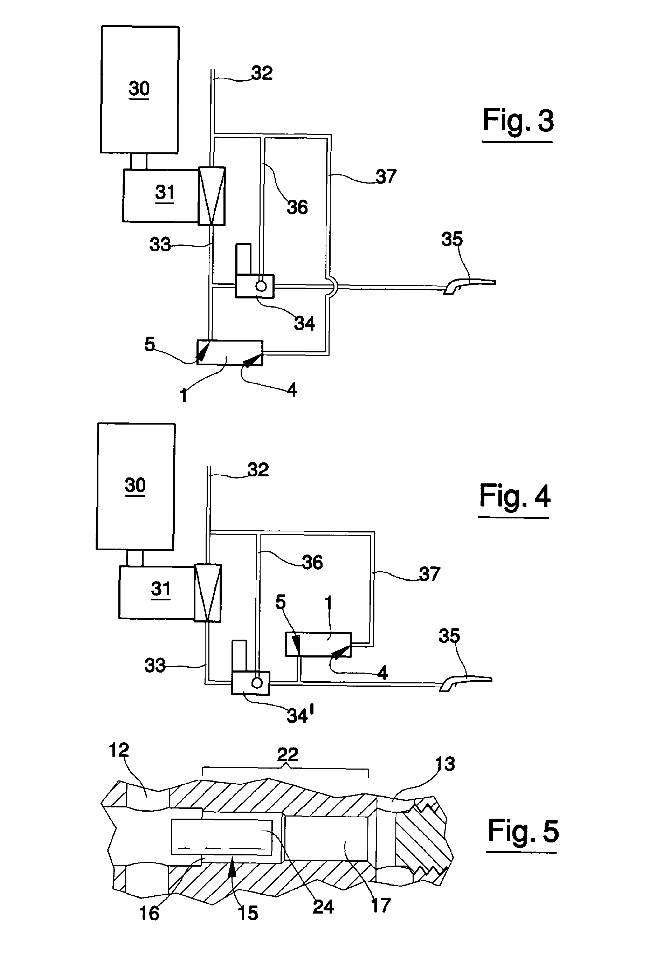

The first portion 16 has a greater external diameter than the second portion 17 and is side-by-side with the hole 12 (figure 5).

The first hole 12 and the second hole 13 pass through the piston 7 and are directed transversally with respect to the first tract 22, which they are in communication with.

The piston 7 exhibits a stem 14, coupled on the first tract 22, which stem 14 is preferably conical and can close the hole 21 by viscous drag due to fluid which, passing in outlet through the hole 21, drags the stem 14 with it.

The piston 7 further exhibits means for intercepting 15 the fluid which act on the first tract 22 to slow down the fluid passage from the first chamber 8 to the second chamber 9.

The means for intercepting 15 are defined in a preferred embodiment by a cylindrical body 24 coupled with play internally of the first tract 22.

The cylindrical body 24 could be replaced by any body that is solid in revolution, such as for example a sphere or any extruded solid, such as for example a parallelepiped, as long as the aspect of the coupling with play is respected with the first tract 22 in which it is inserted.

The elastic means 10, acting on the piston 7 and located in the first chamber 8, exhibit a side which is in striking contact with the piston 7 and an opposite side which is in striking contact on the outlet section 4.

In more detail, the elastic means 10 are preferably defined by a spring 26 exhibiting a first end 26a striking on the annular body 18 and a second end 26b striking on the piston 7.

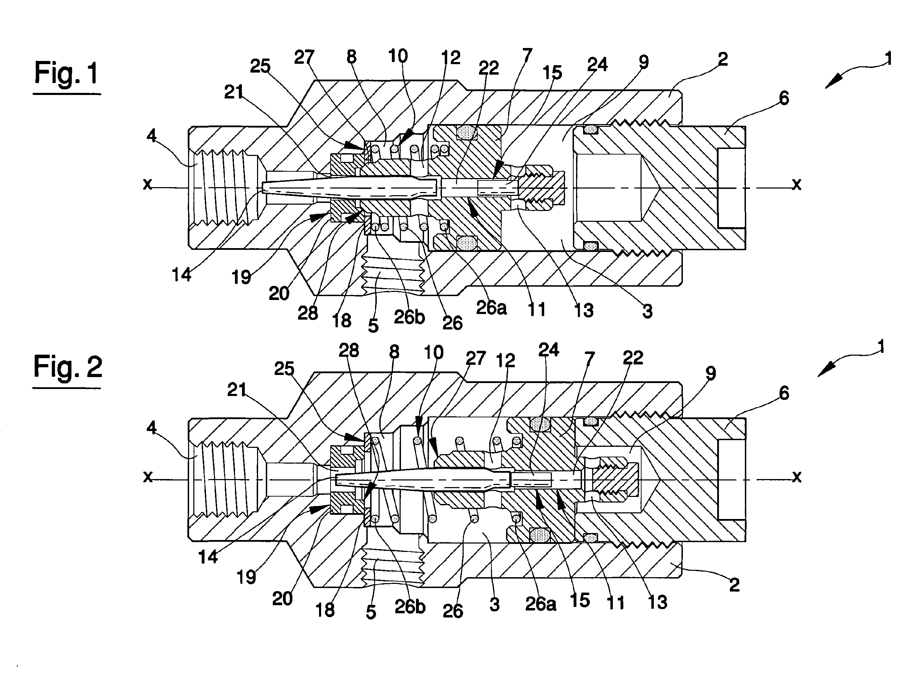

In this configuration in the adjustable self-closing valve 1 the piston 7 is mobile alternatively from a rest position, in which the piston 7 is in striking contact with the cap 6 due to the action of the elastic means 10 and the stem 14 partially intercepts the hole 21 (figure 2), in a closed position in which the piston 7 closes the outlet section 4, i.e. the stem 14 completely intercepts the hole 21 (figure 1).

Owing to the high pressures to which the valve can be subjected, the valve closure is obtained mostly via the piston 7, which exhibits at the outlet 4 section thereof a bevelled projection 27 which in the valve closed position strikes on a seating 28 afforded on the external body 2.

In this configuration with the closure effected by the piston 7, the geometric characteristics of the stem 14 can be varied, as can those of the seating 20, to obtain various stem closure action times.

The adjustable self-closing valve is normally open and self-closes when the first chamber is pressurised.

Figure 3 shows a first example of a hydraulic circuit for water cleaners which is provided with an adjustable self-closing valve 1 mounted in parallel with respect to a traditional by-pass valve 34, which governs a fluid dispenser device 35.

A motor 30 is present in the hydraulic circuit, which motor 30 powers a positive displacement pump 31 connected upstream to a water delivery pipe 32.

A first pipe 33 emerges from the pump 31, which first pipe 33 is in hydraulic connection with the traditional by-pass valve 34 and the adjustable self-closing valve 1.

The traditional by-pass valve 34 is connected to a fluid dispenser device 35 and also to a first by-pass conduit 36 for the water delivery pipe 32.

The adjustable self-closing valve 1 is hydraulically connected to the water delivery pipe 32 through a second by-pass conduit 37.

Figure 4 shows a second example of a hydraulic circuit for water-cleaning machines having an adjustable self-closing valve 1 mounted in series with a second, flow sensitive valve 34' of known type that governs a fluid dispenser device 35.

In this further example of a hydraulic circuit a motor 30 supplies a pump 31 connected upstream to a water delivery pipe 32.

A first pipe 33 emerges from the pump 31, the first pipe 33 being in hydraulic connection with the flow sensitive valve 34'.

The flow sensitive valve 34' is connected downstream to a fluid delivery device 35 and with a by-pass conduit 36 to the water delivery pipe 32.

The adjustable self-closing valve 1 is hydraulically interpositioned between the flow sensitive valve 34' and the fluid delivery device 35 and exhibits a second by-pass conduit 37 connected to the water delivery pipe 32.

The integrated hydraulic circuit of the device operates as in the following description.

The traditional by-pass valve 34 causes an upstream pressure drop to negligible pressure with the fluid regulation device 35 closed and downstream an isolation of the circuit.

When the delivery device 35 is closed, the traditional by-pass valve 34 closes fluid transmission thereto and by-passes the fluid to the water delivery conduit 32 via the first by-pass conduit 36.

A part of the fluid delivered by the pump 31 reaches the adjustable self-closing valve 1 through the inlet section 5.

The valve 1 receives the fluid in the first chamber at a practically zero pressure.

In this configuration the adjustable self-closing valve 1 is in a rest position and the elastic means 10 keep the piston 7 in striking position against the cap 6 (see figure 1).

The means for intercepting the fluid 15 are still.

The stem 14, connected to the piston 7, allows exit of inletting liquid from the valve 1 as pressure levels are very low.

When the delivery device 35 is closed, the valve 1 by-passes the inletting liquid to the water delivery conduit 32 through the second by-pass conduit 37.

When the delivery device 35 is opened, the traditional by-pass valve 34 closes the first by-pass conduit 36, enabling transmission of fluid towards the delivery device 35.

The fluid transmitted by the pump 31 is separated and a part thereof reaches the delivery device 35 while the remaining part thereof goes to the valve 1 via the inlet section 5.

The fluid inletting to the valve 1 exits in drips from the outlet section as the valve 1, in the rest position, has the stem 14 located on the striker element and partially occluding the hole 21.

The drip-passage of the exiting fluid causes a viscous drag and a pressure drop which causes the stem 14 to translate and thus close the hole 21.

At the same time as the stem 14 translates, the piston 7 also translates causing a depression in the second chamber 9.

The fluid inletting to the first chamber 8 passes through the channel 11 of the second chamber 9.

The passage of the fluid is slowed down due to the action of the means for intercepting 15 acting on the channel 11.

At this stage the valve 1 reaches the closed position and the second by-pass conduit 37 is closed so that the pressurised fluid is sent in its totality by the traditional by-pass valve 34 to the dispenser device 35.

The retarded closure of the valve 1 enables working pressure to be reached by the fluid dispenser device 35 very gently, avoiding the emergence of reaction forces.

The integrated hydraulic circuit of the device functions as follows.

The flow sensitive valve 34' enables, when the dispenser device 35 is closed, a lowering of pressure in the whole circuit, to negligible levels.

When the dispenser device 35 is closed the flow-sensitive valve 34' by-passes the fluid through the first by-pass conduit 36, excluding both the dispenser device 35 and the valve 1.

In this configuration there is a small residual pressure on the dispenser device 35 and therefore on the inlet 5 of the valve 1.

The valve 1 is open in the rest position, with the piston 7 striking against the cap 6 under pressure of the elastic means 10, while the means for intercepting 15 are still.

By opening the fluid dispenser device 35 the flow-sensitive valve 34' closes the first by-pass conduit 36.

The fluid sent to the flow-sensitive valve 34' separates and in part goes to the dispenser device 35 and in part reaches the valve 1 via the inlet section 5.

In this case too a dripping of water crosses the hole 21, generating a viscous drag and a pressure drop which cause the stem 14 to close the outlet section 4.

At the same time as the outlet section 4 is closed there is a passage of fluid, slowed by the means for intercepting 15, from the first chamber 8 to the second chamber 9.

Once the valve 1 is closed the fluid is totally conveyed by the flow sensitive valve 34 to the dispenser device 35.

The subdivision of the second tract 11b, on which the cylinder 24 translates, into the two portions 16 and 17 enables a different commutation of the valve 1 from the rest position to the closed position.

As the first portion 16, facing the second chamber 9, has a greater external diameter than the second portion 17, the drip-through of the water will happen faster from the second chamber 9 to the first chamber 8, i.e. during the return run from the closed position to the rest position.

This makes the valve 1 faster to reset, which is a necessary condition for it to correctly perform the following opening of the dispenser device 35.

The valve 1 exhibits the further advantage of managing the duration of the closure transition.

This is possible by acting on the cap 6 which determines a reduction in the volume of the second chamber 9 and at the same time causes a variation in the piston 7 run.

In order to minimise the size of the whole hydraulic circuit, the valve 1 can be advantageously united with the traditional by-pass valve 34 or the flow-sensitive valve 34', so as to form a single body, while maintaining the same configuration as the circuit illustrated in figures 3 and 4.

## Claims

1. A self-closing valve with adjustable activation, comprising:
an external body (2) developing along an axis X-X, internally exhibiting a cavity (3) which terminates externally of the external body (2) in an outlet section (4) and an inlet section (5);
a piston (7), slidable along the axis (X-X) in the cavity (3) from a rest position, in which the piston (7) permits exit of fluid from the outlet section (4), to a closed position in which passage of fluid into the outlet section (4) is prevented, which piston (7) defines internally of the cavity (3) a first chamber (8) located downstream of the piston (7) and a second chamber (9) located upstream of the piston (7), which piston is actuated by viscous forces, by elastic means (10) and by a pressure difference for closing or opening the outlet section (4), and which piston (7) is internally provided with a channel (11) set between and in communication with the first chamber (8) and the second chamber (9);
**characterised in that** the piston (7) comprises:
a stem (14), preferably conical, positioned in the outlet section (4);
means for intercepting (15) the fluid, acting on the channel (11) for slowing the passage of fluid from the first chamber (8) to the second chamber (9).

2. The valve of claim 1, **characterised in that** the means for intercepting (15) the fluid are defined by a cylindrical body (24) coupled with play internally of the channel (11).

3. The valve of claim 1, **characterised in that** the channel (11) is defined by a first tract (22) having an axis which is parallel to the axis (X-X), and a first hole (12) and a second hole (13), each of which first hole (12) and second hole (13) develops transversally to the axis (X-X), and which first hole (12) enables hydraulic communication between the first chamber (8) and the first tract (22) and which second hole (13) enables hydraulic communication between the second chamber (9) and the first tract (22).

4. The valve of claim 1, **characterised in that** the external body (2) exhibits, opposite the outlet section (4), a cap (6) facing the second chamber (9) and being connectable thereto by means of a threaded coupling.

5. The valve of claim 1, **characterised in that** the first chamber (8) is in communication with the inlet section (5) and the outlet section (4).

6. The valve of claim 1, **characterised in that** the elastic means (10), which act on the piston (7) and which are located in the first chamber (8), exhibit an end which strikes against the piston (7) and an opposite end which strikes on the outlet section (4).

7. The valve of claim 1, **characterised in that** the outlet section (4) exhibits a seating (19) in which a striker element (20) is housed, having a hole (21) which is coaxial to the first tract (22) and which enables communication between the outlet section (4) and the first chamber (8).

8. The valve of claim 7, **characterised in that** the seating (19) also includes an increase in section (25) on which an annular body (18) is housed in contact with the striker element (20) and facing the first chamber (8), which annular body has a smaller internal diameter than an external diameter of the striker element (20).

9. The valve of claim 8, **characterised in that** the elastic means (10) positioned in the first chamber (8) and acting on the piston (7) are defined by a spring (26) exhibiting a first end (26a) striking against the annular body (18) and a second end (26b) which strikes against the piston (7).

10. The valve of claim 7, **characterised in that** the piston (7), when located in the rest position, exhibits a projection (27) which is distanced from the seating (28) while the stem (14) is against the striker element (20), partially occluding the hole (21).

11. The valve of claim 7, **characterised in that** the piston (7), when located in the closed position, exhibits the projection (27) striking against the seating (28) and the stem (14) totally occluding the hole (21).

12. The valve of claim 3, **characterised in that** the first hole (12) and the second hole (13) pass through the piston (7) and are transversally oriented with respect to the first tract (22).

13. A hydraulic circuit for dispensing a pressurised fluid, comprising:
a motor (30) powering a pump (31), which pump (31) is connected upstream with a water delivery pipe (32);
a traditional by-pass valve (34), connected downstream of the pump (31) via a first pipe (33), which by-pass valve (34) exhibits a by-pass conduit (36) connected to the water delivery pipe (32) and hydraulically connected to a fluid dispenser device (35);
**characterised in that** it comprises the self-closing valve (1) with adjustable activation of any one of claims from 1 to 12, which valve (1) is connected upstream to the first pipe (33) via a second by-pass conduit (37), the valve (1) being connected in parallel to the traditional by-pass valve (34).

14. A hydraulic circuit for dispensing a pressurised liquid, comprising:
a motor (30) powering a pump (31), which pump (31) is connected upstream with a water delivery pipe (32);
a flow sensitive valve (34'), connected downstream of the pump (31) via a first pipe (33), which flow sensitive valve (34') exhibits a by-pass conduit (36) connected to the water delivery pipe (32) and hydraulically connected to a fluid dispenser device (35);
**characterised in that** it comprises the self-closing valve (1) with adjustable activation of any one of claims from 1 to 12, which valve (1) is hydraulically interpositioned between the flow sensitive valve (34') and the fluid dispenser device (35), and which valve exhibits a second by-pass conduit (37) connected to the delivery pipe (32), the self-closing valve (1) with adjustable activation being connected in series with the flow sensitive valve (34').
